(19) Europäisches Patentamt
European Patent Office
Office européen des brevets

(11) **EP 4 685 721 A1**

(12) **EUROPÄISCHE PATENTANMELDUNG**

(43) Veröffentlichungstag:
28.01.2026 Patentblatt 2026/05

(21) Anmeldenummer: 24190916.7

(22) Anmeldetag: 25.07.2024

(51) Internationale Patentklassifikation (IPC):
*G06Q 20/36* (2012.01)    *G07G 1/00* (2006.01)
*G07F 17/40* (2006.01)

(52) Gemeinsame Patentklassifikation (CPC):
**G06Q 20/3678; G06Q 20/065; G06Q 20/10;
G06Q 20/3672**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**GE KH MA MD TN**

(71) Anmelder: **DG Nexolution eG
65191 Wiesbaden (DE)**

(72) Erfinder:
• **Stivaktakis, Nikolaos
Wiesbaden (DE)**
• **Dr. Söhne, Peter
Wiesbaden (DE)**

• **Weidenhammer, Nils
Wiesbaden (DE)**
• **Nicklas, Ralf
Wiesbaden (DE)**
• **Dr. Fritzhanns, Tilo
Wiesbaden (DE)**

(74) Vertreter: **Klunker IP
Patentanwälte PartG mbB
Destouchesstraße 68
80796 München (DE)**

Bemerkungen:
Geänderte Patentansprüche gemäss Regel 137(2)
EPÜ.

(54) **VERFAHREN ZUR ÜBERTRAGUNG VON DIGITALEN TOKEN**

(57) Die vorliegende Erfindung betrifft ein Verfahren zum Übertragen S3-S6 eines digitalen Tokens 300; 400, 401, 402 zwischen digitalen Wallets 101, 102, 201-204, 501, 502; 600 einer Transaktionsinfrastruktur während einer Offline-Session 200, wobei die Wallets 101, 102, 201-204, 501, 502; 600 unterschiedlichen Entwicklungsgenerationen G; G1, G2, Gn angehören können. Erfindungsgemäß wird dem Token 300; 400, 401, 402 ein Attribut A zugeordnet S2, welches die Entwicklungsgeneration des Wallets 101, 102, 201-204, 501, 502; 600 mit der ältesten Entwicklungsgeneration G; G1, G2, Gn repräsentiert S4, in dem das digitale Token 300; 400, 401, 402 zumindest während der bisherigen Offline-Session 200 gehalten wurde. Die Erfindung betrifft ferner ein digitales Token 300; 400, 401, 402, das geeignet ist, nach dem erfindungsgemäßen Verfahren übertragen S3-S6 zu werden sowie ein hierfür geeignetes digitales Wallet 101, 102, 201-204, 501, 502; 600 und eine Transaktionsinfrastruktur.

Fig. 1

**Beschreibung**

Die vorliegende Erfindung betrifft ein Verfahren zur Übertragung von digitalen Token zwischen digitalen Wallets einer Transaktionsinfrastruktur während einer Offline-Session. Die Erfindung betrifft ferner derartige digitale Token und Wallets sowie eine entsprechende Transaktionsinfrastruktur.

Digitale Zahlungssysteme sind in der Regel online, das heißt, ihre Elemente und Teilnehmer stehen über eine geeignete digitale Transaktions- oder Datenkommunikationsinfrastruktur miteinander in Datenkommunikation. In diesem Zustand können durch eine geeignet standardisierte Datenkommunikation Wert- oder Geldeinheiten zwischen verschiedenen elektronischen Wert- oder Geldbörsen übertragen werden, beispielsweise um Zahlungen zu tätigen.

Solche Wert- oder Geldeinheiten bzw. Wert- oder Geldbörsen werden in der Regel als digitale Token bzw. digitale Wallets bezeichnet. Diese Begriffe werden häufig im Zusammenhang mit Kryptowährungen und Blockchain- oder Distributed-Ledger-Netzwerken verwendet. Entsprechend repräsentiert ein Token eine digitale Einheit oder ein digitales Asset, das in einem digitalen Wallet gespeichert ist. Die Übertragung von Token und deren Speicherung in Wallets ist insbesondere im Rahmen einer Offline-Session kryptographisch gesichert, etwa mittels asymmetrischer Verschlüsselung (Public/Private-Key Infrastruktur), kryptographischen Signaturen oder dergleichen.

Im Rahmen dieser Erfindung sind die Begriffe Token und Wallet nicht beschränkt auf Blockchain- oder Distributed-Ledger-Technologien zu verstehen, sondern sie betreffen auch digitale Zahlungssysteme und deren Transaktionsinfrastruktur, die auf anderen Technologien beruhen, zum Beispiel auch auf technische Lösungen, die unter dem Begriff "Central Bank Digital Currency" (CBDC) diskutiert werden.

Entsprechend umfassen diese Begriffe auch kontobasierte Ansätze und Systeme, bei denen im technischen Sinne keine Werteinheiten übertragen werden, sondern bei einem Zahlungsvorgang der Kontostand des sendenden Wallets (des Zahlers) reduziert und der Kontostand des empfangenden Wallets (des Zahlungsempfängers) entsprechen erhöht wird. Die Konzepte "Token" und "Übertagung von Token" sind im Zusammenhang mit dieser Erfindung deshalb so zu verstehen, dass die Werteinheiten in solchen Wallets ebenfalls als Token bezeichnet werden und der geschilderte Prozess des bilanzmäßigen Ausgleichs von Kontoständen demzufolge auch als Übertragung von Token bezeichnet wird.

Wallets können als Software- und als Hardware-Wallets realisiert sein, wobei letztere aus Gründen der Daten- und Transaktionssicherheit bevorzugt sind. Hardware-Wallets werden in der Regel in Form von oder innerhalb von Sicherheitselementen ("secure element") realisiert. Ein Sicherheitselement umfasst einen speziellen Mikroprozessorchip mit Sicherheitsmerkmalen, die in dem Mikroprozessorchip gespeicherte sensible Daten schützen, etwa Token, kryptographische Schlüssel oder anderweitiges kryptographisches Material. Sie werden in der Regel als Chipkarten, Smart Cards oder Mikroprozessorkarten realisiert oder sind Bestandteil eines mobilen Endgeräts, etwa eines Mobiltelefons oder eines anderen tragbaren Telekommunikationsendgeräts. Sicherheitselemente sind insbesondere gegen physische Angriffe geschützt.

Es liegt in der Natur der Sache, dass derartige Sicherheitselemente und deren Wallets gelegentlich oder sogar regelmäßig offline sind, also zumindest temporär von dem betreffenden digitalen Zahlungssystem abgekoppelt sind und über die zugehörige Transaktionsinfrastruktur weder mit anderen Wallets noch mit einer eventuell vorhandenen Zentralstelle in Datenkommunikation treten können. Wallets, die nicht mit der Transaktionsinfrastruktur verbunden sind, werden gelegentlich als Cold-Wallet bezeichnet, während Wallets, die an die betreffende Transaktions- oder Datenkommunikationsinfrastruktur angeschlossen sind, die also online sind, als Hot-Wallets bezeichnet werden.

Im Zusammenhang mit tokenbasierten Zahlungssystemen muss das Double-Spending-Problem gelöst werden, das sich daraus ergibt, dass Wert- oder Geldeinheiten nicht mehr ausschließlich physikalisch und deshalb eindeutig identifizierbar vorliegen, sondern in Form von digitalen Repräsentationen, den Token, und insofern jedenfalls prinzipiell beliebig kopiert werden können.

Die Lösungsansätze des Double-Spending-Problems betreffen in der Regel die Validierung von Zahlungstransaktionen, also von Übertragungen von Token zwischen zwei Hot-Wallets, durch die Transaktionsinfrastruktur. Dabei wird online sichergestellt, dass ein zu übertragendes Token zuvor noch nicht übertragen wurde. Aber auch in Offline-Situationen bzw. während Offline-Sessions muss die Übertragung von Token zwischen zwei Cold-Wallets letztlich validiert werden, um die mehrfache Verwendung ("double spending") von Token auszuschließen.

Innerhalb einer Offline-Situation bzw. während einer Offline-Session besteht derzeit lediglich die Möglichkeit, die Manipulation von gespeicherten Token im Sicherheitselement auszuschließen, sofern das Sicherheitselement nicht kompromittiert ist. Je älter jedoch das Sicherheitselement ist, desto niedriger also die Entwicklungsversion oder -generation des Sicherheitselements, desto anfälliger ist es und die darauf eingerichteten Wallets für Kompromittierung und Manipulation. Da sich die zur Transaktionssicherheit eingesetzten kryptographischen Verfahren immer weiter verbessern, also mit den sich weiterentwickelnden Angriffen Schritt halten, beispielsweise aus algorithmischen Gründen oder aufgrund zunehmender Schlüssellängen, ist davon auszugehen, dass das Manipulationsrisiko mit zunehmendem Alter der Entwicklungsgeneration eines Wallets steigt.

Deshalb ist es denkbar, dass in Wallets einer hinreichend alten Entwicklungsgeneration Token offline dupliziert oder anderweitig manipuliert werden, die anschließend von Wallets jüngerer Entwicklungsgenerationen akzeptiert und online benutzt werden. Hierbei ergibt sich ein denkbarer Angriff, bei dem ein Angreifer manipulierte oder duplizierte Token über eine Reihe von Wallets der jeweils nächstjüngeren Entwicklungsgeneration kaskadenartig überträgt und schließlich in einem Wallet der jüngsten (aktuellen) Entwicklungsgeneration ablegt. Dadurch wäre die Manipulation nicht mehr erkennbar und die manipulierten oder duplizierten Token könnten online beliebig eingesetzt werden.

Vor diesem Hintergrund ist es die Aufgabe der vorliegenden Erfindung, die geschilderten Probleme zu überwinden und die Übertragung von Token zwischen digitalen Wallets während einer Offline-Session abzusichern.

Diese Aufgabe wird durch die Merkmale der unabhängigen Patentansprüche gelöst. Vorteilhafte Ausgestaltungen und Weiterbildungen der Erfindung sind in den abhängigen Patentansprüchen angegeben.

Im Rahmen der vorliegenden Erfindung ist unter der Entwicklungsgeneration eines Wallets eine stabile Version oder eine technologische Entwicklungsstufe der Wallet-Software und/oder der Soft-/Hardware eines Sicherheitselements zu verstehen, auf dem das Wallet eingerichtet ist. Ältere Entwicklungsgenerationen wurden demzufolge zeitlich früher entwickelt und sind technisch, insbesondere sicherheitstechnisch weniger weit entwickelt, während jüngere Entwicklungsgenerationen zeitlich später entwickelt wurden und technisch, insbesondere sicherheitstechnisch weiterentwickelt sind.

Die im Rahmen einer Transaktionsinfrastruktur eingesetzten Wallets gehören in der Regel sehr unterschiedlichen Entwicklungsgenerationen an. Das heißt, Wallets einer Entwicklungsgeneration müssen sowohl mit Wallets jüngerer als auch mit Wallets älterer Entwicklungsgenerationen transagieren, damit die Transaktionsinfrastruktur die vom Benutzer und dem Gesamtsystem erwartete Funktionalität bietet.

Gemäß einem ersten erfindungsgemäßen Aspekt betrifft die Erfindung ein Verfahren zur Übertragung eines digitalen Tokens zwischen digitalen Wallets einer Transaktionsinfrastruktur während einer Offline-Session, wobei die digitalen Wallets unterschiedlichen Entwicklungsgenerationen angehören können. Die beiden an der Tokenübertragung beteiligten Wallets werden im Folgenden als das sendende Wallet und das empfangende Wallet bezeichnet.

Erfindungsgemäß wird dem Token ein Attribut zugeordnet, das die Entwicklungsgeneration des Wallets mit der ältesten Entwicklungsgeneration repräsentiert, in dem das digitale Token zumindest während der bisherigen Offline-Session gehalten wurde.

Unter den Wallets der bisherigen Offline-Session ist die Reihe derjenigen Wallets zu verstehen, in denen das erfindungsgemäß attributierte Token gehalten wurde, seit es offline vorliegt, wobei das jeweils sendende Wallet das letzte Wallet in dieser Reihe ist und das jeweils empfangende Wallet dieser Reihe (noch) nicht angehört. Erfindungsgemäß repräsentiert das Attribut des übertragenen Tokens also die älteste Entwicklungsgeneration zumindest aller Wallets in dieser Reihe.

Wenn die erste Tokenübertragung der Offline-Session stattfindet, besteht diese Reihe lediglich aus dem sendenden Wallet. Erfindungsgemäß repräsentiert das Attribut des übertragenen Tokens dann die Entwicklungsgeneration des sendenden Wallets. Wenn das zunächst empfangende Wallet das Token seinerseits an ein weiteres, drittes Wallet überträgt oder übertragen hat, repräsentiert das Attribut die Entwicklungsgeneration des älteren der beiden ursprünglich sendenden und empfangenden Wallets.

Da das Attribut auf diese Weise immer die älteste von einem Token besuchte Entwicklungsgeneration angibt, kann das Manipulationsrisiko abgeschätzt werden, dem es während der aktuellen Offline-Session ausgesetzt war. Je älter die vom Attribut repräsentierte Entwicklungsgeneration ist, desto größeren Risiken war das betreffende Token während der Offline-Session ausgesetzt. Das erfindungsgemäße Attribut erlaubt es also, das Risiko jedes einzelnen Tokens dafür zu bestimmen, dass es während der aktuellen Offline-Session möglicherweise manipuliert oder gefälscht wurde.

Indem anhand des Attributs Transaktionen bzw. Tokenübertragungen akzeptiert oder abgelehnt werden, wird die Übertragung von Token zwischen digitalen Wallets während einer Offline-Session abgesichert. Je älter die vom Attribut repräsentierte Entwicklungsgeneration, desto eher wird die Übertragung dieses Tokens aus Sicherheitsgründen abgelehnt. Deshalb akzeptiert ein empfangendes Wallet ein Token eines sendenden Wallets nur dann, wenn das betreffende Token bzw. sein Attribut ein vorgegebenes Kriterium erfüllt, welches das Risiko hinreichend minimiert, dass das zu übertragende Token gefälscht oder manipuliert wurde. Andernfalls wir das Token zurückgewiesen.

Wenn beispielsweise ein Angreifer ein Token manipulieren oder duplizieren konnte, während es in einem Wallet mit vergleichsweise alter Entwicklungsgeneration vorlag, wird durch Prüfen des Attributs verhindert, dass das manipulierte oder duplizierte Token in ein Wallet einer jungen (aktuellen) Entwicklungsgeneration gelangen und dann online ohne Einschränkung verwendet werden kann.

Das Attribut kann hierbei ein inhärentes Merkmal eines jeden Tokens sein, oder es kann erst dann angelegt oder aktiviert werden, wenn das betreffende Token während einer Offline-Session das erste Mal offline übertragen wird.

Vorzugsweise wird das Attribut im Zusammenhang mit der Übertragung des Tokens während der Offline-Session aktualisiert. Diese Aktualisierung umfasst die Prüfung, ob die Entwicklungsgeneration des sendenden Wallets älter ist als die Entwicklungsgeneration, die das Attribut gegenwärtig repräsentiert. Wenn das der Fall ist, wird das Attribut aktualisiert, indem ihm die Entwicklungsgeneration des sendenden Wallets zugewiesen wird, denn diese ist dann die älteste Entwicklungsgeneration aller Wallets, in denen das übertragene Token während der bisherigen Offline-Session gehalten wurde.

Mit anderen Worten, wenn die Entwicklungsgeneration, die das Attribut des übertragenen Tokens repräsentiert, jünger als die Entwicklungsgeneration des senden Wallets ist, wird das Attribut aktualisiert. Wenn die Entwicklungsgeneration, die das Attribut des übertragenen Tokens repräsentiert, älter als die Entwicklungsgeneration des sendenden Wallets ist, bleibt das Attribut unverändert.

Die Aktualisierung des Attributs kann entweder von demjenigen Wallet durchgeführt werden, welches das betreffende Token sendet, oder von demjenigen Wallet, welches das betreffende Token empfängt. Das empfangende Wallet muss die Entwicklungsgeneration des sendenden Wallets kennen.

Es kann vorkommen, dass ein Token während einer Offline-Session nacheinander an eine Vielzahl von Wallets übertragen wird. Bei derart kaskadierenden Transaktionen, die zur Verschleierung einer Manipulation oder eines Angriffs dienen können, wird das Attribut des Tokens von jedem empfangenden Wallet derart aktualisiert, dass es die älteste Entwicklungsgeneration innerhalb dieser Vielzahl von Wallets repräsentiert.

Anhand des erfindungsgemäß aktualisierten Attributs wird dann festgestellt, ob das empfangende Wallet das übertragene Token akzeptieren kann. Beispielsweise wird das übertragene Token vom empfangenden Wallet zurückgewiesen, wenn die Entwicklungsgeneration, die dessen Attribut repräsentiert, ein vorgegebenes Ausschlusskriterium erfüllt. Insofern wird das Attribut vorzugsweise zunächst aktualisiert und dann findet die Akzeptanzprüfung statt, vorzugsweise im empfangenden Wallet während der Offline-Session. Sollte die Akzeptanzprüfung ergeben, dass das Ausschlusskriterium erfüllt ist, wird das betreffende Token zurückgewiesen, es verbleibt also in dem sendenden Wallet.

Token, die aufgrund dieser Akzeptanzprüfung zurückgewiesen werden, werden vorzugsweise einer Validierung unterzogen, sobald die Offline-Session beendet wird, wenn also das Wallet wieder mit der Transaktionsinfrastruktur verbunden ist. Im Rahmen der Validierung wird geprüft, ob das betreffende Token tatsächlich während der Offline-Session manipuliert oder dupliziert wurde bzw. zumindest ob eine hinreichend hohe Wahrscheinlichkeit für eine Manipulation oder Duplizierung vorliegt.

Das empfangende Wallet akzeptiert das übertragene Token vorzugsweise aufgrund eines Vergleichs der Entwicklungsgeneration, die das Attribut des Token repräsentiert, mit der Entwicklungsgeneration des empfangenden Wallets. Im Rahmen eines solchen Vergleichs wird das Token während der Offline-Session von dem empfangenden Wallet vorzugsweise akzeptiert, wenn die folgende Ungleichung erfüllt ist: $A^* > (G - T)$.

Hierbei bezeichnet $A^*$ die Entwicklungsgeneration, die das Attribut des übertragenen Token nach dessen Aktualisierung repräsentiert, damit auch die Entwicklungsgeneration des sendenden Wallets bei der Akzeptanzprüfung berücksichtigt wird. Ferner bezeichnet G die Entwicklungsgeneration der empfangenden Wallets und T ist ein vorgegebener Sicherheitsparameter, der das Intervall an Generationen festlegt, innerhalb dessen die Entwicklungsgeneration, die ein Attribut repräsentiert, liegen muss, damit das betreffende Token akzeptiert wird. Wenn die Ungleichung nicht erfüllt ist, wenn also $A^* \leq (G - T)$ gilt, wird das übertragene Token von dem empfangenden Wallet nicht akzeptiert und zurückgewiesen.

Vorzugsweise werden von empfangenden Wallets nicht akzeptierte Token nach Beendigung der Offline-Session an einen Intermediär und/oder eine zentrale Stelle zur dortigen Validierung und/oder Erneuerung übertragen.

Im Rahmen einer Offline-Session kann es vorkommen, dass ein Wallet ein Token nicht akzeptiert, das an es übertragen werden soll. Dieses Token wird dann während der Offline-Session gesondert markiert und/oder abgelegt und kann dann nicht mehr für Transaktionen genutzt bzw. an weitere Wallets übertragen werden. Deshalb werden Token, die ein empfangendes Wallet nicht akzeptiert bzw. zurückweist von dem jeweils sendenden Wallet markiert und/oder in ihm gesondert abgelegt. Sobald ein Wallet die Offline-Session beendet, indem es wieder mit der Transaktionsinfrastruktur verbunden wird, können diese nicht akzeptierten und markierten/ abgelegten Token zentral validiert werden, etwa von einer dafür eingerichteten Zentralstelle der Transaktionsinfrastruktur oder einem Intermediär. Geeignete Intermediäre wären in diesem Kontext zum Beispiel die Betreiberorganisationen der Wallets, nationale Zentralbanken oder geeignete exekutive Stellen oder Behörden.

Bei der Validierung wird geprüft, ob das betreffende nicht akzeptierte Token dennoch gültig ist, also eine genuine Geld- oder Währungseinheit repräsentiert und nicht bei einem Angriff auf ein Wallet manipuliert oder dupliziert wurde. Im erstgenannten Fall kann das Token erneuert und dem Wallet wieder für Transaktionen zur Verfügung gestellt werden, etwa dadurch, dass die Entwicklungsgeneration des Attributs geeignet aktualisiert wird. Im letztgenannten Fall kann das Token als gefälscht kategorisiert und aus dem Verkehr gezogen werden.

Vorzugsweise sind die Wallets, deren Transaktionen sowie die Token und die Attribute kryptographisch gesichert. Die Attribute können zum Beispiel mittels elektronischer Signaturen vor Fälschungen geschützt werden. Dazu besitzt jedes Wallet einen individuellen privaten Signaturschlüssel pWallet und den zugehörigen öffentlichen Verifikationsschlüssel. Der Signaturschlüssel ist mit einem universellen Signaturschlüssel pG des Herausgebers signiert und damit unveränderbar der Entwicklungsgeneration G zugeordnet. Jede Nachricht, die von dem betreffenden Wallet mit dem Signaturschlüssel pWallet signiert wird, dient somit als Nachweis der Entwicklungsgeneration G des Wallets.

Zur kryptographischen Absicherung der Transaktionen kann ein Challenge-Response-Protokoll bei der Initiierung der Session durchgeführt werden, wobei die dabei übergebenen, zufälligen Parameter ("nonces") zur MAC-Absicherung auszutauschender Nachrichten während der Session verwendet werden. Damit weist jedes Wallet nach, dass es die entsprechend zur Generation passenden kryptographischen Schlüssel besitzt und anwenden kann.

Prinzipiell sind die Token entweder unteilbar oder sie können geteilt und mit anderen Token zum neuen Token verschmolzen werden.

Unteilbare Token besitzen jeweils einen festgeschriebenen, unveränderlichen Wert ähnlich dem Bargeld. Solche Token können in verschiedenen Denominationen vorkommen, etwa in 1, 2, 5, 10, 50 Eurocent oder in 1, 2, 5, 10, 20, 50, 100 oder 500 Euro. Token können auch Denominationen haben, die keiner Bargeld-Denomination entsprechen, etwa 200, 2.000, 5.000 oder 10.000 EUR. Wahlweise können auch nur Token der kleinsten Denomination vorgesehen sein, also etwa 1 Eurocent. Jeder Betrag wird in einem Wallet dann als eine Menge von einzelnen, unteilbaren 1-EuroCent-Token realisiert.

Jedes unteilbare Token besitzt das erfindungsgemäße Attribut. Bei der Übertragung eines Geldwerts, der durch mehrere unteilbare Token repräsentiert werden muss, etwa werden 15 Euro durch zwei Token à 10 Euro und 5 Euro realisiert, kann es vorkommen, dass eines der mehreren Token vom empfangenden Wallet nicht akzeptiert wird. In diesem Fall wird das nicht akzeptierte Token vorzugsweise im sendenden Wallet entsprechend markiert oder abgelegt. Gegebenenfalls wird dann entweder die gesamte Transaktion rückabgewickelt oder der Fehlbetrag wird nachgefordert oder es wird nur der Geldbetrag übertragen und gebucht, den die akzeptierten Token in Summe repräsentieren.

Bei einem teilbaren Token wird dessen Attribut vorzugsweise unverändert an die daraus geteilten Token weitervererbt. Wenn im Rahmen einer Transaktion ein teilbares Token des Werts 12,45 EUR mit dem Attribut A=G in zwei Token à 10,00 EUR und 2,45 EUR geteilt wird, haben die beiden resultierenden Token ebenfalls das Attribut A=G. Bei der Verschmelzung von zwei Token wird das Attribut des resultierenden Token aus Sicherheitsgründen mit der älteren der beiden Entwicklungsgenerationen belegt. Die Verschmelzung zweier Token, deren Attribute die Entwicklungsgenerationen G1 und G2 > G1 repräsentieren, repräsentiert das Attribut A des verschmolzenen Tokens die ältere Entwicklungsgeneration A=G1.

Vorzugsweise wird die Integrität der Übertragung des digitalen Tokens durch einen Message Authentication Code (MAC) gesichert. Dazu wird der MAC generiert, indem ein kryptographischer Hashwert aus dem Token, seinem Wert und seinem Attribut abgeleitet und mit einem geheimen Schlüssel verschlüsselt wird. Der MAC dient als eine Art "Herkunftssiegel" des Tokens und kann vom empfangenden Wallet auf Authentizität geprüft werden, weil dort der gleiche geheime Schlüssel (symmetrische Verschlüsselung) oder ein entsprechender öffentlicher Schlüssel (asymmetrische Verschlüsselung) vorliegt.

Im Zusammenhang mit einer kontobasierten Ausführungsvariante der Erfindung wird bei der Übertragung eines Tokens ein Kontostand im sendenden Wallet um den zu übertragenden Geldwert reduziert und ein Kontostand im empfangenden Wallet wird entsprechend erhöht. Bei dieser Ausführungsvariante werden Attribute nicht als Datenelemente realisiert, die mit den Token verknüpft sind und jeweils zusammen mit diesen übertragen werden, sondern in den Wallets werden Unterwallets bzw. Sub-Wallets angelegt, die jeweils die möglichen Entwicklungsgenerationen repräsentieren. Die Summe der Unterkontostände aller Unterwallets eines Wallets entspricht dann dem Kontostand dieses Wallets. Bei einer Übertragung von Token werden im empfangenden Wallet die Unterkontostände derjenigen Unterwallets mit genau der Entwicklungsgeneration erhöht, in denen im sendenden Wallet die Unterkontostände reduziert wurden.

Auch bei der kontobasierten Ausführungsvariante gilt, dass das empfangende Wallet ein zu übertragendes Token vorzugsweise aufgrund eines Vergleichs der Entwicklungsgeneration, die das aktualisierte Attribut des Tokens repräsentiert, mit der Entwicklungsgeneration des empfangenden Wallets entweder akzeptiert oder zurückweist. Das Token wird während der Offline-Session also von dem empfangenden Wallet vorzugsweise akzeptiert, wenn die folgende Ungleichung erfüllt ist: $A^* > (G - T)$. Wenn die Ungleichung nicht erfüllt ist, wenn also $A^* \leq (G - T)$ gilt, wird das übertragene Token von dem empfangenden Wallet zurückgewiesen und verbleibt im sendenden Wallet.

Gemäß einem zweiten erfindungsgemäßen Aspekt betrifft die Erfindung ein digitales Token, das zur Übertragung zwischen digitalen Wallets einer Transaktionsinfrastruktur während einer Offline-Session erfindungsgemäß eingerichtet ist, wobei die Wallets unterschiedlichen Entwicklungsgenerationen angehören können. Erfindungsgemäß ist dem Wallet ein Attribut zugeordnet, das die Entwicklungsgeneration des Wallets mit der ältesten Entwicklungsgeneration repräsentiert, in dem das digitale Token zumindest während der bisherigen Offline-Session gehalten wurde.

Vorzugsweise ist das Token eingerichtet, entsprechend den Verfahren und Ausführungsformen gemäß dem ersten Aspekt der Erfindung während einer Offline-Session übertragen zu werden.

Gemäß einem dritten erfindungsgemäßen Aspekt betrifft die Erfindung ein digitales Wallet einer Transaktionsinfrastruktur, das zur Übertragung von digitalen Token gemäß dem zweiten Aspekt während einer Offline-Session eingerichtet ist. Das digitale Wallet ist derart eingerichtet, dass es die Verfahren gemäß dem ersten Aspekt unterstützt. Hierbei wird das Attribut eines an ein empfangendes Wallet übertragenen Tokens auf die Entwicklungsgeneration des sendenden Wallets aktualisiert, wenn die Entwicklungsgeneration, die das Attribut repräsentiert, jünger ist als die Entwicklungsgeneration des sendenden Wallets.

Gemäß einem vierten erfindungsgemäßen Aspekt betrifft die Erfindung eine digitale Transaktionsinfrastruktur, umfassend eine Vielzahl von digitalen Wallets nach dem dritten Aspekt der Erfindung und digitale Token nach dem zweiten Aspekt der Erfindung. Die Transaktionsinfrastruktur ist eingerichtet, Offline-Sessions erfindungsgemäß zu unterstützen.

Die erfindungsgemäße digitale Transaktionsinfrastruktur umfasst vorzugsweise insbesondere eine Validierungseinheit, welche Token online validiert und/oder erneuert, die während einer Offline-Session nicht akzeptiert bzw. abgelehnt wurden.

Weitere Vorteile, Merkmale und Einzelheiten der Erfindung ergeben sich aus der nachfolgenden Beschreibung der anliegenden Figuren. Die Figurenbeschreibung ist nicht beschränkend zu verstehen, denn sie erläutert einzelne bevorzugte Ausführungsformen der Erfindung, deren Merkmale untereinander und mit den oben beschriebenen Merkmalen kombinierbar sind. Dabei zeigen:

Fig. 1    eine Illustration einer erfindungsgemäßen Transaktionsinfrastruktur;

Fig. 1a   eine Variante der Ausführungsform nach Fig. 1;

Fig. 2    ein Flussdiagramm, das die Schritte des erfindungsgemäßen Verfahrens zeigt;

Fig. 2a   eine Variante der Ausführungsform nach Fig. 2;

Fig. 3    einen Prozess zum Splitten und/ oder Zusammensetzen eines Token während einer Offline-Session; und

Fig. 4    eine Illustration eines Wallets gemäß einem kontobasierten Ansatz.

Im Folgenden wird die vorliegende Erfindung unter Bezugnahme auf die beigefügten Figuren detailliert erläutert. Die Figuren offenbaren spezifische Ausführungsbeispiele und Varianten der vorliegenden Erfindung. Diese Ausführungsbeispiele und Varianten der Erfindung sind ausreichend detailliert beschrieben, um dem Fachmann die Umsetzung der Erfindung zu ermöglichen. Es versteht sich, dass die verschiedenen Ausführungsformen sich nicht wechselseitig ausschließen, obwohl sie sich voneinander unterscheiden mögen. So kann beispielsweise ein bestimmtes Merkmal oder eine bestimmte Struktur, das/die hier im Zusammenhang mit einer Ausführungsform beschrieben ist, auch in anderen Ausführungsformen umgesetzt werden, ohne dass dies vom Anwendungsbereich der vorliegenden Erfindung abweicht. Ebenso selbstverständlich ist es, dass die Position oder die Anordnung einzelner Merkmale oder Elemente innerhalb einer offenbarten Ausführungsform modifiziert werden kann, ohne vom Anwendungsbereich der vorliegenden Erfindung abzuweichen.

Die nachfolgende detaillierte Figurenbeschreibung ist daher nicht in einem einschränkenden Sinne zu verstehen. Der Umfang der vorliegenden Erfindung wird allein durch die beigefügten Ansprüche definiert im Lichte einer technisch sinnvollen Auslegung und unter Berücksichtigung etwaiger Äquivalente. In den Figuren beziehen sich gleiche Bezugszeichen auf gleiche oder funktional entsprechende Merkmale oder Elemente in verschiedenen Ausführungsformen.

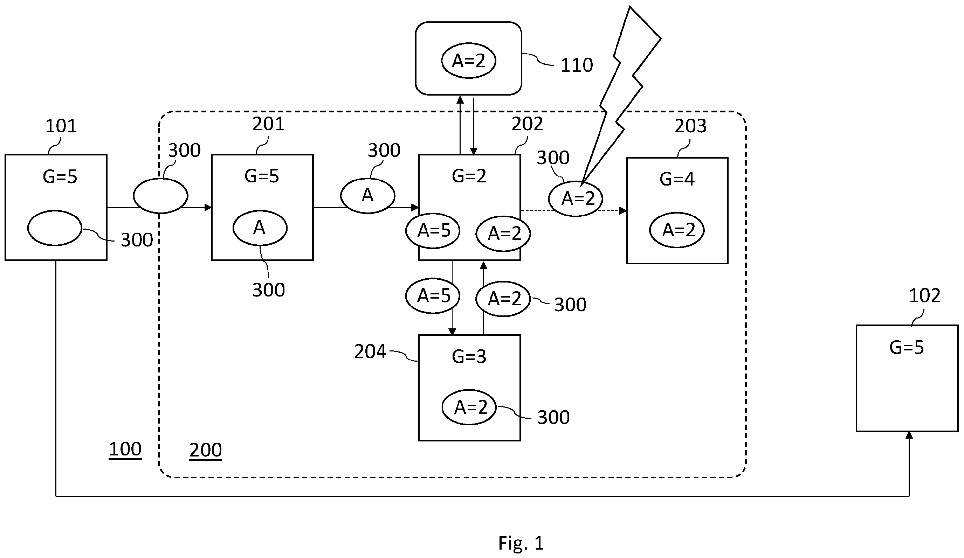

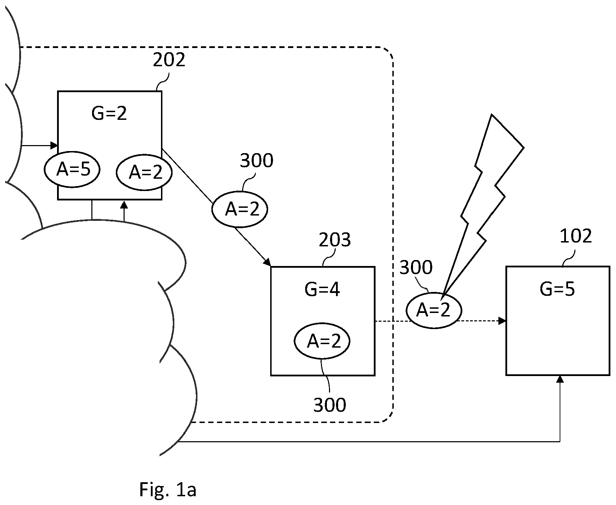

Fig. 1 illustriert eine Transaktionsinfrastruktur für die Übertragung von Geld- oder Werteinheiten. Bekannte Beispiele für eine derartige Transaktionsinfrastruktur sind das Bitcoin-Netzwerk und Blockchain- oder Distributed-Ledger-Netzwerke zur Handhabung von Kryptowährungen und Übertragung von Bitcoin und anderen Krypto-Token. Auch die derzeit weltweit in Entwicklung befindlichen Zentralbank-Digitalwährungen ("Central Bank Digital Currency", CBDC) basieren auf Transaktionsinfrastrukturen, in deren Rahmen die vorliegende Erfindung anwendbar ist. Hierzu gehört insbesondere die Infrastruktur des zukünftigen digitalen Euros der Europäischen Zentralbank.

Genau wie solche beispielhaften Transaktionsinfrastrukturen umfasst auch die erfindungsgemäße Transaktionsinfrastruktur digitale Endgeräte mit digitalen Wallets, etwas Mobiltelefone, Computer oder spezialisierte Hardware-Wallets, die es Nutzern ermöglichen, Geld- oder Werteinheiten, sogenannte Token, im Rahmen von Transaktionen zu empfangen und zu übertragen.

Die Transaktionsinfrastruktur umfasst oder nutzt darüber hinaus ein Datenkommunikationsnetzwerk, welches die Datenkommunikation zwischen den Endgeräten bzw. deren Wallets sowie zu und von zentralen Verarbeitungseinheiten ermöglicht, etwa einem Intermediär 110 oder einer Zentralstelle. Im einfachsten Fall fungiert das Internet als Datenkommunikationsnetzwerk der Transaktionsinfrastruktur. Schließlich ist die Transaktionsinfrastruktur mit Sicherheitssystemen und -funktionen ausgestattet, die durch kryptographische Verfahren wie Ver- und Entschlüsselung oder Signieren und Verifizieren die Integrität und den Schutz der Transaktionen und Geld-/Werteinheiten bzw. Token gewährleisten.

Ein Wallet ist im Wesentlichen eine ausführbare Softwarestruktur, etwa eine installierte App, die die Speicherung und Sicherung von Geld-/Werteinheiten bzw. Token ermöglicht. In der Regel umfasst ein Wallet auch eine geeignete Benutzerschnittstelle, die auf dem Display des digitalen Endgeräts angezeigt wird, auf dem es installiert ist.

Aus Sicherheitsgründen werden Wallets häufig als Hardware-Wallets ausgebildet und in Sicherheitselementen ("secure element") eingerichtet, etwa in Smart Cards, SIM-Mobilfunkkarten, TPM-Chips oder dergleichen. Diese speziellen Mikroprozessorchips sind mit Sicherheitsfunktionen ausgestattet, um sensible Daten, wie etwa kryptographisches Material, isoliert von dem eigentlichen Endgerät zu schützen. Insbesondere schützen Sicherheitselemente auch vor physischen Angriffen und Eingriffen.

Fig. 1 zeigt Wallets 101, 102, 201-204 sowie ein Token 300, das schrittweise von den und an die genannten Wallets 101, 102, 201-204 übertragen wird. Dabei wird zwischen der Offline-Session 200 und der Online-Session 100 unterschieden. Die Wallets 101, 102 und der Intermediär 110 sind online, also mit der Transaktionsinfrastruktur verbunden. Der Intermediär 110 wird vom Herausgeber der Token 300 oder einer vertrauenswürdigen Institution betrieben, etwa der Europäischen Zentralbank oder einer anderen geeigneten Behörde.

Die Wallets 201-204 sind von der Transaktionsinfrastruktur getrennt und damit offline. Während der Online-Session 100 sind die Komponenten der Transaktionsinfrastruktur miteinander verbunden und es werden Echtzeit-Transaktionen durchgeführt, beispielsweise wie durch den Pfeil zwischen den Wallets 101, 102 angedeutet.

Fig. 1 zeigt, wie während der Online-Session 100 das beispielhafte Token 300 zunächst von dem Wallet 101 an das Wallet 201 übertragen wird. Anschließend geht das Wallet 201 offline und damit beginnt die Offline-Session 200. Die Echtheit bzw. Authentizität des Tokens 300 wird bei dieser ersten Transaktion nicht in Frage gestellt, da es online auf seine Echtheit geprüft wurde.

Während der Offline-Session 200 wird das Token 300 ausgehend vom Wallet 201 nacheinander an die Wallets 202, 203, 204 übertragen. Keines der Wallets 201, 202, 203, 204 ist in dieser Zeit mit der Transaktionsinfrastruktur verbunden, so dass die Übertragung des Tokens 300 durch direkte Kopplung von jeweils zwei der Wallets 201, 202, 203, 204 geschieht, zum Beispiel über USB- oder NFC-Schnittstellen.

Jedes Wallet 101, 102, 201-204 entstammt einer bestimmten Entwicklungsgeneration G. Jedes Wallet 101, 102, 201-204 "kennt" seine eigene Entwicklungsgeneration, denn sie ist im Wallet als Datenelement bzw. Parameter gespeichert. Im Rahmen der beschriebenen Ausführungsformen sind einem Wallet 101, 102, 201-204 erfindungsgemäß auch zumindest die Entwicklungsgenerationen G von all jenen Wallets 101, 102, 201-204 bekannt, die das Token 300 an dieses Wallet 101, 102, 201-204 überträgt, wie nachfolgend detailliert beschrieben wird.

Die Entwicklungsgeneration G gibt den technologischen Entwicklungsstand des jeweiligen Wallets 101, 102, 201-204 an, aus der etwa Features und Funktionen, Sicherheitsstandards und -updates, Leistungsmerkmale sowie Soft- und Hardwareversionen und das Kompatibilitäts- und Integrationsniveau abgeleitet werden können. Je kleiner die Entwicklungsgeneration G eines Wallets numerisch ist, desto älter und schlechter geschützt und desto manipulationsgefährdeter ist es. Die Wallets 101, 201, 102 der Fig. 1 sind mit der Entwicklungsgeneration G=5 die jüngsten und manipulationssichersten Wallets, während die Manipulationssicherheit der Wallets 203 (G=4), 204 (G=3) und 202 (G=2) demgegenüber sukzessive schlechter ist.

Ein vor diesem Hintergrund bekannter Angriffsvektor bezieht sich darauf, etwa das älteste Wallet 202 (G=2) während der Offline-Session 200 zu kompromittieren, indem dessen Token 300 gefälscht oder dupliziert werden. Anschließend werden diese gefälschten bzw. duplizierten Tokens 300 per Übertragungskette aufsteigender Entwicklungsgenerationen an ein aktuelles Wallet der Entwicklungsgeneration G=5 übertragen, also etwa nacheinander an die Wallets 204 (G=3), 203 (G=4) und schließlich 102 (G=5), denn systembedingt kann jedes Wallet zumindest an Wallets der nächsthöheren und der nächstniedrigeren Entwicklungsgeneration Token 300 übertragen und von diesen empfangen. Dadurch wird die ursprüngliche Kompromittierung verschleiert und die gefälschten oder duplizierten Token 300 werden legitimiert.

Gemäß dem Beispiel nach Fig. 1 befindet sich das Token 300 im Wallet 201, wenn die Offline-Session 200 beginnt, indem die Verbindung des Wallets 201 zur Transaktionsinfrastruktur unterbrochen wird. Das Wallet 201 richtet in Reaktion darauf in dem in ihm gespeicherten Token 300 das Attribut A ein. In gleicher Weise richtet jedes Wallet in allen seinen Token das Attribut A ein, wenn es offline geht.

Alternativ kann das Attribut A auch in allen Token standardmäßig angelegt sein, auch wenn das Attribut A während einer Online-Session 100 nicht benötigt wird.

Das Token 300 soll vom sendenden Wallet 201 der Entwicklungsgeneration G=5 an das empfangende Wallet 202 der Entwicklungsgeneration G=2 übertragen werden.

Dazu prüft das empfangende Wallet 202, ob es das Token 300 überhaupt akzeptieren kann. Dies ist der Fall, weil es während der bisherigen Offline-Session 200 nur auf Wallets innerhalb eines akzeptablen Intervalls von Entwicklungsgenerationen gespeichert war.

Bei der Akzeptanzprüfung muss die Entwicklungsgeneration G des sendenden Wallets 201 berücksichtigt werden, so dass dabei das aktualisierte Attribut A* des Tokens 300 verwendet werden muss. Wenn das Attribut A bereits vom sendenden Wallet 201 aktualisiert wird, kann anschließend die Akzeptanzprüfung durch das empfangende Wallet 202 erfolgen. Wenn, bevorzugt, das Attribut A erst nach dessen Übertragung vom empfangenden Wallet 202 aktualisiert wird, muss bei der Akzeptanzprüfung der (zukünftige) Wert des Attributs A nach der Aktualisierung berücksichtigt werden. Der (zukünftige) Wert des aktualisierten Attributs A wird zum besseren Verständnis nachfolgend mit A* bezeichnet.

Zur Akzeptanzprüfung im bevorzugten Falle der Attributaktualisierung erst nach der erfolgreichen Tokenübertragung prüft das Wallet 202 die Ungleichung A* > (G - T), wobei T ein Sicherheitsparameter ist, der das akzeptable Intervall von Entwicklungsgenerationen definiert. Beispielhaft sei als Sicherheitsparameter T=2 angenommen, so dass die Ungleichung 5 > (2 - 2) erfüllt ist und das empfangende Wallet 202 das übertragene Token 300 akzeptieren kann.

Damit das empfangende Wallet 202 diese Akzeptanzprüfung durchführen kann, benötigt es die Entwicklungsgeneration G=5 des sendenden Wallets 201, die es etwa bei diesem ausliest oder von ihm zugesandt bekommt. Selbstverständlich ist ein solches Auslesen oder Übertragen der Entwicklungsgeneration G des sendenden Wallets 201 in ähnlicher Weise kryptographisch gesichert, wie die Übertragung des Tokens 300 selbst. Gemäß einer Ausführungsvariante kann die Akzeptanzprüfung ebenso auch vom sendenden Wallet 201 durchgeführt werden.

Nach der positiv ausgefallenen Akzeptanzprüfung durch das empfangende Wallet 202 wird das Token 300 übertragen und dessen Attribut A wird aktualisiert. Es erhält dann den Wert A*, der bereits bei der Akzeptanzprüfung verwendet wurde. Dazu ordnet das empfangende Wallet 202, das der Entwicklungsgeneration G=2 angehört, dem Attribut A des Token 300 die Entwicklungsgeneration G=5 des sendenden Wallets 201 zu. Selbstverständlich löscht das sendende Wallet 201 das übertragenen Token 300 nach der erfolgreichen Übertragung.

Der Sicherheitsparameter T ist bei der beschriebenen Ausführungsform eine positive Ganzzahl und bestimmt eine tolerierte Generationendistanz bzw. ein akzeptables Generationenintervall ausgehend von der Entwicklungsgeneration des jeweils empfangenden Wallets. Ein übertragenes Token wird nicht akzeptiert, wenn die Entwicklungsgeneration, die dessen Attribut repräsentiert, diese Generationendistanz überschreitet bzw. wenn sie außerhalb dieses Intervalls liegt. Wenn die Entwicklungsgeneration, die ein Attribut repräsentiert, die durch den Sicherheitsparameter T determinierte Generationendistanz nicht überschreitet bzw. wenn sie innerhalb des Generationenintervalls liegt, kann das prüfende Wallet das betreffende Token akzeptieren und es offline oder online an weitere Wallets übertragen.

Die gesamte Transaktion, umfassend das Auslesen oder Senden der Entwicklungsgeneration G=5 des sendenden Wallets 201 sowie die Übertragung des Tokens 300 an das empfangenden Wallet 202, wird kryptographisch abgesichert. Dazu kann etwa ein initiales Challenge-Response-Verfahren durchgeführt werden, um zufällig generierte Parameter, sogenannte "nonces", für die MAC-Absicherung der (Daten-) Transaktionen zu verwenden. Dadurch weist jedes Wallet nach, dass es über die zur eigenen Entwicklungsgeneration passenden kryptographischen Schlüssel verfügt.

Gemäß Fig. 1 soll das Token 300 (A=5) weiter vom nun sendenden Wallet 202 (G=2) an das empfangende Wallet 204 (G=3) übertragen werden. Dazu muss der Wert des aktualisierten Attributs A* ermittelt werden, den das empfangende Wallet 204 dem Token 300 nach einer erfolgreichen Übertragung des Token 300 zuweisen würde. Da in diesem Fall die Entwicklungsgeneration G=2 des sendenden Wallets 202 älter ist, als diejenige, die das Attribut A=5 aktuell repräsentiert, entspricht der Wert des aktualisierten Attributs A* des Tokens 300 der Entwicklungsgeneration G=2 des sendenden Wallets 202. Es gilt also A*=2.

Bei der entsprechenden Akzeptanzprüfung mittels der Ungleichung A* > (G - T) stellt sich heraus, dass die Ungleichung mit 2 > (3 - 2) erfüllt ist und das Wallet 204 das Token 300 als gültiges Zahlungsmittel akzeptiert. Nach der Übertragung des Token 300 aktualisiert das empfangende Wallet 204 dessen Attribut auf A=2.

Das Token 300 wird dann von dem Wallet 204 wieder zurück an das Wallet 202 übertragen. Bei der Aktualisierung des Tokens 300 durch das Wallet 202 wird das Attribut A=2 nicht geändert, denn die Entwicklungsgeneration des Wallets 204 ist mit G=3 jünger, und die Akzeptanzprüfung durch das Wallet 202 stellt die Gültigkeit des Token 300 fest.

Das Token 300 wird anschließend von dem Wallet 202 an das Wallet 203 weiterübertragen. Da die Entwicklungsgeneration des Wallets 203 mit G=4 jünger ist als diejenige Entwicklungsgeneration, die das Attribut A=2 repräsentiert, würde das Attribut A=2 des Token 300 bei der Aktualisierung unverändert bleiben, so dass A*=2 gilt. Die Akzeptanzprüfung ergibt nun, dass die Ungleichung A* > (G - T) nicht erfüllt wird, denn es gilt 2 = 4 - 2. Demzufolge wird das Token 300 mit dem aktualisierten Attribut A*=2 vom Wallet 203 der Entwicklungsgeneration G=4 nicht akzeptiert, weil die Differenz der Entwicklungsgenerationen zu groß ist. Das Token 300 lag während der aktuelle Offline-Session 200 nämlich bereits in einem Wallet vor, dessen Entwicklungsgeneration zu alt ist, nämlich in dem Wallet 202 (G=2), um von einem Wallet der Entwicklungsgeneration G=4 akzeptiert zu werden. Weil das Token 200 bereits in einem derart manipulationsgefährdeten Wallet wie dem Wallet 202 (G=2) vorlag, wird es vom Wallet 203 (G=4) zurückgewiesen und für eine Validierung vorgesehen, sobald die Offline-Session 200 beendet ist. Das nicht akzeptierte bzw. zurückgewiesene Token 300 verbleibt damit im sendenden Wallet 202 und wird dort verwahrt, bis das Wallet wieder online geht und die Validierung des Tokens 300 möglich wird.

Gemäß dem Ausführungsbeispiel der Fig. 1 wird die Aktualisierung des Attributs A vom jeweils empfangenden Wallet 204, 202 unter Rückgriff auf die Entwicklungsgeneration G des jeweils sendenden Wallets 202, 204 durchgeführt. Alternativ kann diese Aktualisierung auch jeweils vom sendenden Wallet durchgeführt werden.

Schließlich endet gemäß Fig. 1 die Offline-Session 200 und das Wallet 202 ist wieder mit der Transaktionsinfrastruktur verbunden. Jetzt wird das nicht akzeptierte Token 300 zur Validierung an den Intermediär 110 übertragen, der prüft, ob das Token 300 tatsächlich manipuliert, dupliziert oder gefälscht wurde bzw. zumindest ob eine hinreichend hohe Wahrscheinlichkeit für eine Manipulation oder Duplizierung vorliegt. Falls dies der Fall ist, wird das spezifische Token 300 wie im Falle von Falschgeld aus dem Verkehr gezogen und gegebenenfalls erneuert bzw. ersetzt. Falls das Token 300 als valide erkannt wird, wird es an das Wallet 202 als gültiges Zahlungsmittel zurückgegeben.

In dem Augenblick, in dem ein Wallet wieder online ist, verlieren die Attribute A ihre Bedeutung und können gelöscht werden. Alternativ können die Attribute A auch auf die aktuelle Generation gesetzt werden.

Die Fig. 1a illustriert den vom Beispiel nach Fig. 1 abweichenden Fall eines Sicherheitsparameters T=3, bei dem bei der Übertragung des Tokens 300 vom Wallet 202 an das Wallet 203 die Ungleichung $A^* > (G - T)$ aufgrund von $2 > 4 - 3$ erfüllt ist. In diesem Falle würde das Wallet 203 (G=5) das Token 300 akzeptieren. Für die anschließende Übertragung des Tokens 300 vom Wallet 203 and das Wallet 102 muss dann erneut die Ungleichung $A^* > (G - T)$ erfüllt sein, da das Wallet 203 (G=5) als Offline-Wallet angesehen wird. In diesem Falle ist die obige Ungleichung mit $2 = 5 - 3$ jedoch nicht erfüllt und die Transaktion wird zurückgewiesen.

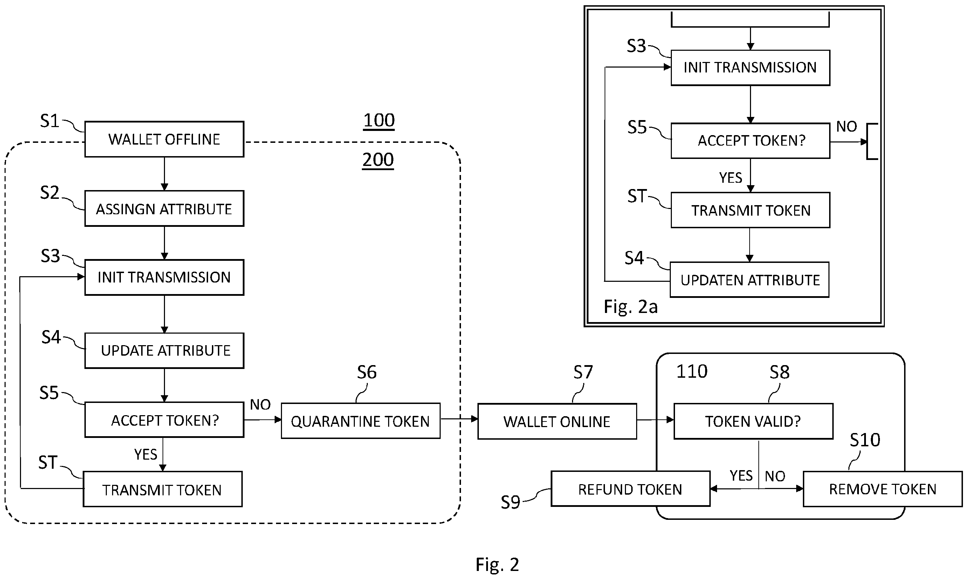

Fig. 2 veranschaulicht in Form eines Flussdiagramms die Schritte eines Verfahrens zur Übertragung eines digitalen Tokens zwischen zwei digitalen Wallets gemäß der vorliegenden Erfindung, wobei die Aktualisierung des Attributs vom jeweils sendenden Wallet vor dessen Übertragung durchgeführt wird. Fig. 2a illustriert eine davon abweichende Schrittfolge, die im Einklang mit dem Verfahren nach Fig. 1 steht und bei der die Aktualisierung des Attributs vom jeweils empfangenden Wallet nach dessen Übertragung durchgeführt wird.

Gemäß einem Schritt S1 nach Fig. 2 geht ein Wallet offline, in welchem ein Token abgelegt ist (WALLET OFFLINE). Dieses Wallet wird dabei von der Transaktionsinfrastruktur abgekoppelt, zum Beispiel indem ein digitales Endgerät mit einem Sicherheitselement, in welchem das Wallet vorliegt, ausgeschaltet wird oder vom betreffenden Datenkommunikationsnetzwerk getrennt wird.

Gemäß einem Schritt S2 wird in dem Token ein Attribut A eingerichtet, sobald das betreffende Wallet offline ist (ASSIGN ATTRIBUTE).

Gemäß einem Schritt S3 wird die Übertragung des attributierten Tokens von einem sendenden Wallet an ein empfangendes Wallet initiiert (INIT TRANSMISSION).

Gemäß einem Schritt S4 aktualisiert das sendende Wallet das Attribut A des zu übertragenen Tokens in der oben geschilderten Art und Weise (UPDATE ATTRIBUTE). Dabei wird die Entwicklungsgeneration, die das Attribut des Token repräsentiert, mit der Entwicklungsgeneration des sendenden Wallets verglichen und dem Attribut wird die ältere dieser beiden Entwicklungsgenerationen zugewiesen.

Gemäß einem Schritt S5 führt das empfangende Wallet eine Akzeptanzprüfung in der oben geschilderten Art und Weise durch (ACCPT TOKEN?). Dabei wird die Ungleichung $A > (G - T)$ geprüft, wobei T ein Sicherheitsparameter ist, der die älteste Entwicklungsgeneration bestimmt, die relativ zur Entwicklungsgeneration des aktuellen Wallets noch akzeptabel ist. Wenn das Token im Rahmen der aktuellen Offline-Session 200 in einem Wallet mit einer älteren Entwicklungsgeneration vorlag, wird es vom empfangenden Wallet nicht akzeptiert. Selbstverständlich ist die genannte Ungleichung nur eines von viele denkbaren Verfahren zur Akzeptanzprüfung. So ist es vorstellbar, dass auch die zeitliche Dauer der Offline-Session 200 in die Prüfung mit eingeht (sofern ein vertrauenswürdiger Zeitgeber vorhanden ist) oder weitere Parameter, wie zum Beispiel ein Maß für das Manipulationsrisiko der verschiedenen Entwicklungsgenerationen oder dergleichen.

Sofern das Token in Schritt S5 akzeptiert wird, wird es in Schritt ST (TRANSMIT TOKEN) an das empfangende Wallet übertragen und kann von diesem erneut gemäß Schritt S3 an weitere Wallets übertragen werden.

Sofern das Token in Schritt S5 nicht akzeptiert wird, wird das vom empfangenden Wallet zurückgewiesene Token in einem Schritt S6 in dem sendenden Wallet abgelegt und für eine spätere Validierung durch einen Intermediär 110 oder eine andere Zentralstelle vorgesehen (QUARANTINE TOKEN), die mit dem Herausgeber der Token oder dem Betreiber der Wallets und/oder der Transaktionsinfrastruktur in Verbindung steht.

Gemäß einem Schritt S7 geht das sendende Wallet mit den darin abgelegten, zurückgewiesenen Token zu einem bestimmten Zeitpunkt wieder online (WALLET ONLINE) und steht dann über die Transaktionsinfrastruktur mit dem Intermediär 110 in Datenkommunikationsverbindung.

Gemäß einem Schritt S8 wird das zur Validierung vorgesehene Token an den Intermediär 110 übertragen und dort validiert (TOKEN VALID?), das heißt, es wird geprüft, ob das Token tatsächlich gefälscht, manipuliert oder dupliziert wurde.

Wenn dies nicht der Fall ist, wenn das Token also nicht gefälscht wurde und gültig ist, wird es in einem Schritt S9 an das betreffende Wallet zurückerstattet (REFUND TOKEN) und damit wieder der regulären Zirkulation zugeführt. Alternativ kann ein gleichwertiges Ersatztoken ausgestellt werden oder der entsprechende Betrag wir anderweitig ausgeglichen, etwa gegenüber einem Referenzkonto.

Wenn es sich jedoch bei dem Token um eine Fälschung handelt, wird es in Schritt S10 aus dem Verkehr gezogen und zum Beispiel zerstört. Bei dem Token handelt es sich dann um tokenisiertes Falschgeld, dessen Wert nach bekannten Kriterien gegebenenfalls erstattet wird, indem dem betreffenden Wallet ein gleichwertiges Token bereitgestellt wird.

Gemäß der Ausführungsvariante nach Fig. 2a sind die Schritte S4, S5 und ST gegenüber der Ausführungsvariante nach Fig. 2 in ihrer Reihenfolge so vertauscht, dass nach Fig. 2a zunächst die Akzeptanzprüfung (Schritt S5) erfolgt und im Erfolgsfalle dann die Übertragung des Tokens (Schritt ST) und das empfangende Wallet und dort schließlich die Attributaktualisierung (Schritt S4) erfolgt. Alles andere ist identisch wie oben im Zusammenhang mit Fig. 2 beschrieben. Die Bezeichnungen S4 und S5 bedingen in Fig. 2a also keine zeitliche oder kausale Reihenfolge.

Die Schrittfolge nach Fig. 2a entspricht der Ausführungsform nach Fig. 1, denn es wird zunächst die Akzeptanzprüfung durch das empfangende Wallet unter Berücksichtigung des (zukünftigen) Attributs A* vorgenommen (Schritt S5), damit die Entwicklungsgeneration des sendenden Wallets bei der Prüfung berücsichigt wird. Im Erfolgsfalle wird das Token an das empfangende Wallet übertragen Schritt ST) und dort wird schließlich dessen Attribut aktualisiert.

Im Rahmen der bisherigen Beschreibung von bevorzugten Ausführungsformen ind -varianten war durchgehend von einem bzw. dem Token die Rede. Selbstverständlich steht dieser Begriff für eine beliebige Vielzahl von Token mit gegebenenfalls sehr unterschiedlichen Gegenwerten. So ist es beispielsweise möglich, dass Token in beliebige Werte aufteilbar sind oder Token verschmolzen werden können und die Wertsumme der Ausgangstoken annehmen. Alternativ können auch inteilbare Token vorgesehen sein, so dass jeder Geldwert der Menge von entsprechend vielen Token einer kleinsten Werteinheit entspricht.

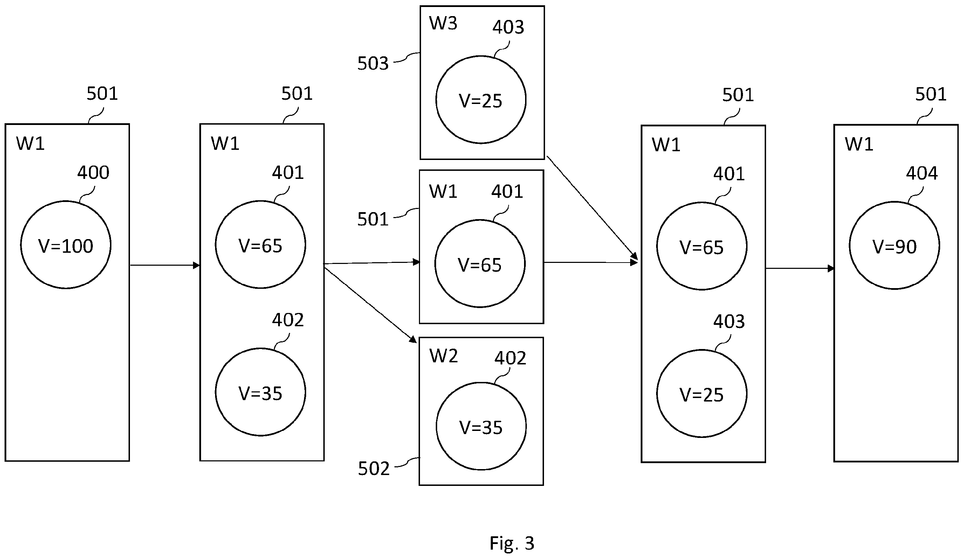

Fig. 3 veranschaulicht den Prozess des Teilens oder Splittens von Token und des Verschmelzens oder Zusammenfassens von Token während einer Offline-Session. Die entsprechende Lehre und deren Varianten sind technisch und konzeptionell Kompatibel mit den Ausführungsformen gemäß den Fig. 1 und 2 und in deren Rahmen realisierbar und nutzbar.

Das Token 400 gemäß der Ausführungsform nach Fig. 3 ist teilbar. Das Token 400 besitzt V=100 Währungseinheiten. Es ist während einer Offline-Session in einem Wallet 501 mit der Bezeichnung W1 in folgender Form gespeichert:

$$dT = (100, A, G_{W1}) \ MAC \ K_{W1}$$

Hierbei bezeichnet

| | |
|---|---|
| dT | das digitale Token 400, |
| 100 | den Wert V des Token 400, |
| A | das Attribut des Token 400, |

| | |
|---|---|
| $G_{W1}$ | die Entwicklungsgeneration des Wallets W1, in dem das Token 400 aktuell abgelegt ist, oder gegebenenfalls eine ältere Entwicklungsgeneration, wenn das Token vorher bereits offline übertragen wurde, |
| $K_{W1}$ | die kryptographischen Schlüssel des Wallets W1, und |
| MAC | den Message Authentication Code. |

Der individuelle Message Authentication Code (MAC) wird jeder Transaktion zugeordnet, um die Integrität der Tokenübertragung zwischen zwei Wallets offline wie online zu gewährleisten. Der MAC wird durch einen kryptographischen Algorithmus generiert, der das Token, sein Attribut und einen kryptographischen Schlüssel des sendenden Wallets verwendet. Das empfangende Wallet nutzt einen entsprechenden kryptographischen Schlüssel zur Verifizierung des MAC, wodurch die Authentizität des Token sichergestellt wird. Der MAC basiert üblicherweise auf der symmetrischen Verschlüsselung, bei der der Verschlüsselungsschlüssel des sendenden Wallets und der Entschlüsselungsschlüssel des empfangenden Wallets identisch sind. In ähnlicher Weise können jedoch MAC-Codes auch basierend auf einer asymmetrischen Verschlüsselung eingesetzt werden, bei denen das sendende Wallet einen geheimen Signaturschlüssel nutzt und das empfangende Wallet einen entsprechenden öffentlichen und durch ein Systemzertifikat beglaubigten Verifikationsschlüssel.

Ausgangspunkt ist gemäß Fig. 3 die Situation, dass im Zuge einer Transaktion Währungseinheiten in Höhe von V=35 an ein Wallet 502 mit der Bezeichnung W2 übertragen werden sollen.

Dazu wird das Token 400 in zwei neue Token 401 und 402 geteilt, nämlich in dT1 und dT2, die jeweils im Wallet W1 in folgender Form gespeichert sind:

$$dT1 = (65, A, G_{W1}) \ MAC \ K_{W1}$$

$$dT2 = (35, A, G_{W2}) \ MAC \ K_{W2}$$

Danach wird das geteilte Token 402 mit der Bezeichnung dT2 während der Offline-Session an das Wallet 502 mit der Bezeichnung W2 übertragen. Der Prozess der Übertragung einschließlich der Aktualisierung und Akzeptanzprüfung des Token 402 wurde bereits im Zusammenhang mit den Fig. 1 und 2 ausführlich beschrieben.

Nach der Übertragung wird das Token 402 (dT2) im Wallet 502 (W2) gutgeschrieben, wobei dem Attribut A des Tokens 402 (dT2) von dem Wallet 502 (W2) bei der Aktualisierung die ältere der beiden Entwicklungsgenerationen $G_{W1}$ und $G_{W2}$ zugewiesen wird. Das Token 401 (dT1) verbleibt unverändert in Wallet 501 (W1).

Im Falle des umgekehrten Prozesses des Verschmelzens des Tokens 401 des Wallets W1 mit einem an das Wallet W1 übertragenen Token 403 eines Wallets W3 mit der Entwicklungsgeneration $G_{W3}$ zu einem neuen Token 404 würden die beiden ursprünglichen Token

$$dT1 = (65, A, G_{W1}) \text{ MAC } K_{W1}$$

$$dT3 = (25, A, G_{W3}) \text{ MAC } K_{W3}$$

ein neues Token 404 (dT) bilden, das die Summe der Währungseinheiten von dT1 und dT3 trägt:

$$dT = (90, A, G_{W3}) \text{ MAC } K_{W1}$$

Aus Sicherheitsgründen würde dem Attribut A des neuen Tokens 404 (dT) die ältere der beiden Entwicklungsgenerationen $G_{W1}$ und $G_{W3}$ zugewiesen, die die beiden Attribute Ader Token 401 (dT1) und 403 (dT3) repräsentieren. Im Beispiel der Fig. 3 ist die Entwicklungsgenerationen $G_{W3}$ des Wallets 503 (W3) älter als die Entwicklungsgenerationen $G_{W1}$ des Wallets 501 (W1) und wird deshalb für das Token 404 übernommen.

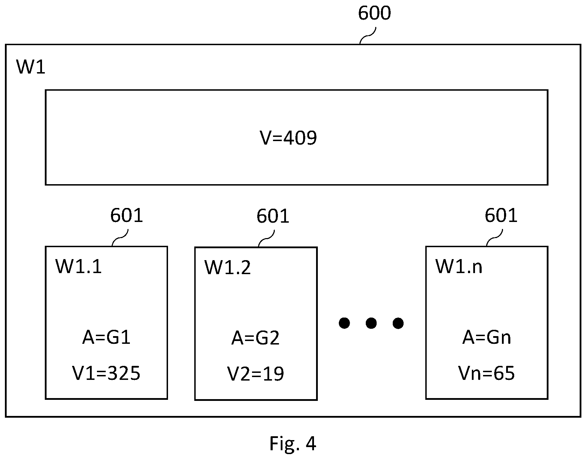

Gemäß einer in Fig. 4 illustrierten besonderen Ausführungsvariante der Erfindung kann anstatt des bisher geschilderten tokenbasierten Ansatzes auch ein kontobasierter Ansatz verfolgt werden, bei dem Übertragungen von Werteinheiten von einem sendenden Wallet an ein empfangendes Wallet nicht durch die elektronische Übertragung eines oder mehrerer digitaler Token des gewünschten Werts realisiert werden, sondern durch die Subtraktion des zu übertragenden Werts im sendenden Wallet und die Addition des zu übertragenden Werts im empfangenden Wallet.

Fig. 4 illustriert ein Wallet 600 gemäß dem kontobasierten Ansatz mit der Bezeichnung W1 und dem summarischen Kontostand V=409 (=V1+V2+Vn). Es umfasst mehrere Unterwallets 601, in denen jeweils nur Werteinheiten einer bestimmten Entwicklungsgeneration verzeichnet sind. So umfasst das Unterwallet W1.1 Werteinheiten in Höhe von V1=325, die im Rahmen der aktuellen Offline-Session in einem ältesten Wallet der Entwicklungsgeneration G1 vorlagen. Das Attribut A=G1 ist hier nicht mehr unmittelbar einem oder mehreren Token zugeordnet, sondern dem Unterwallet und dadurch mittelbar den darin befindlichen Werteinheiten V=325. Entsprechend verhält es sich mit den weiteren Unterwallets W1.2 bis W1.n.

Wenn das Wallet 600 zum Beispiel Werteinheiten in Höhe von 400 überträgt, werden beispielsweise die 325 Werteinheiten des Unterwallets W1.1 der Entwicklungsgeneration A=G1 plus 10 Werteinheiten des Unterwallets W1.2 der Entwicklungsgeneration A=G2 plus die 65 Werteinheiten des Unterwallets W1.n der Entwicklungsgeneration A=Gn übertragen und vom empfangenden Wallet in der im Zusammenhang mit den Fig. 1 und 2 beschriebenen Weise verarbeitet und schließlich in den entsprechenden Unterwallets des empfangenden Wallets verbucht, sofern die Aktualisierung und die Akzeptanzprüfung erfolgreich verlaufen.

Selbstverständlich kann die Akzeptanzprüfung bei einer Transaktion gemäß dem kontobasierten Ansatz ebenso zu einer Akzeptanz eines Teilbetrags führen, wie beim tokenbasierten Ansatz. Im Beispiel nach Fig. 4 kann das etwa dazu führen, dass lediglich Werteinheiten der Generationen G1 und G2 in Höhe von insgesamt 335 akzeptiert und die 65 Werteinheiten der Generation Gn vom empfangenden Wallet zurückgewiesen werden. In der vorstehenden Beschreibung ist die Erfindung unter Bezugnahme auf bestimmte Ausführungsformen beschrieben worden. Es wird jedoch deutlich, dass verschiedene Modifikationen und Änderungen daran vorgenommen werden können, ohne dass der breitere Rahmen der Erfindung verlassen wird. Die oben beschriebenen Prozessabläufe werden beispielsweise unter Bezugnahme auf eine bestimmte Reihenfolge der Prozesshandlungen beschrieben. Die Reihenfolge vieler der beschriebenen Verfahrensschritte kann jedoch geändert werden, ohne den Anwendungsbereich oder die Funktionsweise der Erfindung zu beeinträchtigen. Die Beschreibung und die Zeichnungen sind dementsprechend eher illustrativ als einschränkend zu verstehen.

## Patentansprüche

1. Verfahren zur Übertragung eines digitalen Token (300; 400, 401, 402) zwischen digitalen Wallets (101, 102, 201-204, 501, 502; 600) einer Transaktionsinfrastruktur während einer Offline-Session (200), wobei die Wallets (101, 102, 201-204, 501, 502; 600) unterschiedlichen Entwicklungsgenerationen (G; G1, G2, Gn) angehören, **dadurch gekennzeichnet, dass** dem Token (300; 400, 401, 402) ein Attribut (A) zugeordnet wird (S1), welches die Entwicklungsgeneration (G; G1, G2, Gn) des Wallets (101, 102, 201-204, 501, 502; 600) mit der ältesten Entwicklungsgeneration (G; G1, G2, Gn) repräsentiert (S4), in dem das digitale Token (300; 400, 401, 402) zumindest während der bisherigen Offline-Session (200) gehalten wurde.

2. Verfahren nach Anspruch 1, **dadurch gekennzeichnet, dass** das Attribut beim Übertragen (S3) des Tokens (300; 400, 401, 402) aktualisiert wird (S4) und vorzugsweise von dem das Token (300; 400, 401, 402) empfangenden Wallet (101, 102, 201-204, 501, 502; 600) aktualisiert wird (S4).

3. Verfahren nach Anspruch 1 oder 2, **dadurch gekennzeichnet, dass** bei einer Übertragung des Tokens (300; 400, 401, 402) nacheinander an eine Vielzahl von Wallets (101, 102, 201-204, 501, 502; 600) während der Offline-Session (200) die jeweils empfangenden Wallets (101, 102, 201-204, 501, 502; 600) das Attribut (A) jeweils derart aktualisieren (S4), dass das Attribut (A) die älteste Entwicklungsgeneration (G; G1, G2, Gn) innerhalb der Vielzahl von Wallts (101, 102, 201-204, 501, 502; 600) repräsentiert.

4. Verfahren nach Anspruch 2 oder 3, **dadurch gekennzeichnet, dass** beim Übertragen (S3) des Tokens (300; 400, 401, 402) das Attribut (A) auf die Entwicklungsgeneration (G; G1, G2, Gn) des sendenden Wallets aktualisiert wird (S4), wenn die Entwicklungsgeneration (G; G1, G2, Gn), die das Attribut (A) repräsentiert, jünger ist als die Entwicklungsgeneration (G; G1, G2, Gn) des senden Wallets (101, 102, 201-204, 501, 502; 600).

5. Verfahren nach einem der vorhergehenden Ansprüche, **dadurch gekennzeichnet, dass** das Attribut (A) des übertragenden Token (300; 400, 401, 402) aktualisiert wird (S4), bevor das empfangende Wallet (101, 102, 201-204, 501, 502; 600) das Token (300; 400, 401, 402) aufgrund einer Prüfung des aktualisierten Attributs (A) akzeptiert (S5).

6. Verfahren nach einem der vorhergehenden Ansprüche, **dadurch gekennzeichnet, dass** das empfangende Wallet (101, 102, 201-204, 501, 502; 600) das übertragene Token (300; 400, 401, 402) aufgrund eines Vergleichs der Entwicklungsgeneration (G; G1, G2, Gn), die das Token (300; 400, 401, 402) repräsentiert, mit der Entwicklungsgeneration (G; G1, G2, Gn) des empfangenden Wallets (101, 102, 201-204, 501, 502; 600) akzeptiert (S5), wobei vorzugsweise das Token (300; 400, 401, 402) von dem empfangenden Wallet (101, 102, 201-204, 501, 502; 600) nicht akzeptiert wird, wenn die Ungleichung $A \leq (G - T)$ erfüllt ist, wobei A die Entwicklungsgeneration (G; G1, G2, Gn) bezeichnet, die das Attribut repräsentiert, G die Entwicklungsgeneration (G; G1, G2, Gn) des empfangenden Wallets (101, 102, 201-204, 501, 502; 600) bezeichnet und T einen vorgegebenen Sicherheitsparameter bezeichnet.

7. Verfahren nach Anspruch 6, **dadurch gekennzeichnet, dass** von dem empfangenden Wallet (101, 102, 201-204, 501, 502; 600) nicht akzeptierte Token (300; 400, 401, 402) nach Beendigung (S7) der Offline-Session (200) an einen Intermediär (110) und/oder eine zentrale Stelle zur dortigen Validierung (S8) und/oder Erneuerung (S9) übertragen werden.

8. Verfahren nach einem der vorhergehenden Ansprüche, **dadurch gekennzeichnet, dass** das Attribut (A) kryptographisch gesichert wird, vorzugswese mittels einer elektronischen Signatur, und/ oder dass die Integrität der Übertragung des digitalen Token (300; 400, 401, 402) durch einen Message Authentication Code, MAC, geschützt wird.

9. Verfahren nach einem der vorhergehenden Ansprüche, **dadurch gekennzeichnet, dass** das Token (300; 400, 401, 402) unteilbar ist oder das Token mit anderen Token verschmolzen und geteilt werden kann.

10. Verfahren nach einem der vorhergehenden Ansprüche, **dadurch gekennzeichnet, dass** dem Token (300; 400, 401, 402) das Attribut (A) zugeordnet wird, indem das Token (300; 400, 401, 402) in einem Unterwallet (601) des Wallets (600) abgelegt wird, welches die Entwicklungsgeneration (G; G1, G2, Gn) des Wallets (101, 102, 201-204, 501, 502; 600) mit der ältesten Entwicklungsgeneration (G; G1, G2, Gn) repräsentiert, in dem das digitale Token (300; 400, 401, 402) zumindest während der bisherigen Offline-Session (200) gehalten wurde.

11. Digitales Token (300; 400, 401, 402), eingerichtet und geeignet zur Übertragung zwischen digitalen Wallets (101, 102, 201-204, 501, 502; 600) einer Transaktionsinfrastruktur während einer Offline-Session (200), wobei die Wallets (101, 102, 201-204, 501, 502; 600) unterschiedlichen Entwicklungsgenerationen (G; G1, G2, Gn) angehören, **dadurch gekennzeichnet dass** dem Token (300; 400, 401, 402) ein Attribut (A) zugeordnet ist, welches die Entwicklungsgeneration (G; G1, G2, Gn) des Wallets (101, 102, 201-204, 501, 502; 600) mit der ältesten Entwicklungsgeneration (G; G1, G2, Gn) repräsentiert, in dem das digitale Token (300; 400, 401, 402) zumindest während der bisherigen Offline-Session gehalten wurde.

12. Token (300; 400, 401, 402) nach Anspruch 11, **dadurch gekennzeichnet, dass** das Token (300; 400, 401, 402) eingerichtet ist, gemäß einem Verfahren der Ansprüche 2 bis 10 während einer Offline-Session (200) übertragen zu werden.

13. Digitales Wallet (101, 102, 201-204, 501, 502; 600) einer Transaktionsinfrastruktur, eingerichtet zur Übertragung von digitalen Token (300; 400, 401, 402) von oder an zumindest ein weiteres digitales Wallet (101, 102, 201-204, 501, 502; 600) der Transaktionsinfrastruktur während einer Offline-Session (200), **dadurch gekennzeichnet, dass** das Wallet (101, 102, 201-204, 501, 502; 600) einer Entwicklungsgeneration (G; G1, G2, Gn) angehört und eingerichtet ist, eine Übertragung von digitalen Token (300; 400, 401, 402) nach Anspruch 11 oder 12 gemäß einem Verfahren nach einem der Ansprüche 1 bis 10 zu unterstützen.

14. Digitales Wallet (101, 102, 201-204, 501, 502; 600) nach Anspruch 13, **dadurch gekennzeichnet, dass** das Wallet eingerichtet ist, das Attribut (A) eines an das Wallet (101, 102, 201-204, 501, 502; 600) übertragenen Tokens (300; 400, 401, 402) auf die Entwicklungsgeneration (G; G1, G2, Gn) des sendenden Wallets (101, 102, 201-204, 501, 502; 600) zu aktualisieren, wenn die Entwicklungsgeneration (G; G1, G2, Gn), die das Attribut (A) repräsentiert, jünger ist als die Entwicklungsgeneration (G; G1, G2, Gn) des sendenden Wallets (101, 102, 201-204, 501, 502; 600).

15. Digitale Transaktionsinfrastruktur, umfassend eine Vielzahl von digitalen Wallets (101, 102, 201-204, 501, 502; 600) nach Anspruch 13 oder 14 und digitale Token (300; 400, 401, 402) nach Anspruch 11 oder 12, wobei die Transaktionsinfrastruktur eingerichtet ist, Offline-Sessions (200) zu unterstützen, und vorzugsweise eine Validierungseinheit (110) umfasst, welche Token (300; 400, 401, 402) validiert und/oder erneuert, die von Wallets (101, 102, 201-204, 501, 502; 600) während einer Offline-Session (200) nicht akzeptiert wurden.

**Geänderte Patentansprüche gemäss Regel 137(2) EPÜ.**

1. Verfahren zur Übertragung eines digitalen Token (300; 400, 401, 402) zwischen digitalen Wallets (101, 102, 201-204, 501, 502; 600) einer Transaktionsinfrastruktur, die in Form von oder innerhalb von Sicherheitselementen realisiert sind, während einer Offline-Session (200), wobei die Wallets (101, 102, 201-204, 501, 502; 600) unterschiedlichen Entwicklungsgenerationen (G; G1, G2, Gn) angehören, wobei je älter ein Sicherheitselement ist, desto niedriger ist dessen Entwicklungsgeneration (G; G1, G2, Gn) und desto anfälliger sind die darauf eingerichteten Wallets (101, 102, 201-204, 501, 502; 600) für Kompromittierung und Manipulation, **dadurch gekennzeichnet, dass** dem Token (300; 400, 401, 402) ein Attribut (A) zugeordnet wird (S1), welches die Entwicklungsgeneration (G; G1, G2, Gn) des Wallets (101, 102, 201-204, 501, 502; 600) mit der ältesten Entwicklungsgeneration (G; G1, G2, Gn) repräsentiert (S4), in dem das digitale Token (300; 400, 401, 402) zumindest während der bisherigen Offline-Session (200) gehalten wurde.

2. Verfahren nach Anspruch 1, **dadurch gekennzeichnet, dass** das Attribut beim Übertragen (S3) des Tokens (300; 400, 401, 402) aktualisiert wird (S4) und vorzugsweise von dem das Token (300; 400, 401, 402) empfangenden Wallet (101, 102, 201-204, 501, 502; 600) aktualisiert wird (S4).

3. Verfahren nach Anspruch 1 oder 2, **dadurch gekennzeichnet, dass** bei einer Übertragung des Tokens (300; 400, 401, 402) nacheinander an eine Vielzahl von Wallets (101, 102, 201-204, 501, 502; 600) während der Offline-Session (200) die jeweils empfangenden Wallets (101, 102, 201-204, 501, 502; 600) das Attribut (A) jeweils derart aktualisieren (S4), dass das Attribut (A) die älteste Entwicklungsgeneration (G; G1, G2, Gn) innerhalb der Vielzahl von Wallts (101, 102, 201-204, 501, 502; 600) repräsentiert.

4. Verfahren nach Anspruch 2 oder 3, **dadurch gekennzeichnet, dass** beim Übertragen (S3) des Tokens (300; 400, 401, 402) das Attribut (A) auf die Entwicklungsgeneration (G; G1, G2, Gn) des sendenden Wallets aktualisiert wird (S4), wenn die Entwicklungsgeneration (G; G1, G2, Gn), die das Attribut (A) repräsentiert, jünger ist als die Entwicklungsgeneration (G; G1, G2, Gn) des senden Wallets (101, 102, 201-204, 501, 502; 600).

5. Verfahren nach einem der vorhergehenden Ansprüche, **dadurch gekennzeichnet, dass** das Attribut (A) des übertragenden Token (300; 400, 401, 402) aktualisiert wird (S4), bevor das empfangende Wallet (101, 102, 201-204, 501, 502; 600) das Token (300; 400, 401, 402) aufgrund einer Prüfung des aktualisierten Attributs (A) akzeptiert (S5).

6. Verfahren nach einem der vorhergehenden Ansprüche, **dadurch gekennzeichnet, dass** das empfangende Wallet (101, 102, 201-204, 501, 502; 600) das übertragene Token (300; 400, 401, 402) aufgrund eines Vergleichs der Entwicklungsgeneration (G; G1, G2, Gn), die das Token (300; 400, 401, 402) repräsentiert, mit der Entwicklungsgeneration (G; G1, G2, Gn) des empfangenden Wallets (101, 102, 201-204, 501, 502; 600) akzeptiert (S5), wobei vorzugsweise das Token (300; 400, 401, 402) von dem empfangenden Wallet (101, 102, 201-204, 501, 502; 600) nicht akzeptiert wird, wenn die Ungleichung $A \leq (G - T)$ erfüllt ist, wobei A die Entwicklungsgeneration (G; G1, G2, Gn) bezeichnet, die das Attribut repräsentiert, G die Entwicklungsgeneration (G; G1, G2, Gn) des empfangenden Wallets (101, 102, 201-204, 501, 502; 600) bezeichnet und T einen vorgegebenen Sicherheitsparameter bezeichnet.

7. Verfahren nach Anspruch 6, **dadurch gekennzeichnet, dass** von dem empfangenden Wallet (101, 102, 201-204, 501, 502; 600) nicht akzeptierte Token (300; 400, 401, 402) nach Beendigung (S7) der Offline-Session (200) an einen Intermediär (110) und/oder eine zentrale Stelle zur dortigen Validierung (S8) und/oder Erneuerung (S9) übertragen werden.

8. Verfahren nach einem der vorhergehenden Ansprüche, **dadurch gekennzeichnet, dass** das Attribut (A) kryptographisch gesichert wird, vorzugswese mittels einer elektronischen Signatur, und/oder dass die Integrität der Übertragung des digitalen Token (300; 400, 401, 402) durch einen Message Authentication Code, MAC, geschützt wird.

9. Verfahren nach einem der vorhergehenden Ansprüche, **dadurch gekennzeichnet, dass** das Token (300; 400, 401, 402) unteilbar ist oder das Token mit anderen Token verschmolzen und geteilt werden kann.

10. Verfahren nach einem der vorhergehenden Ansprüche, **dadurch gekennzeichnet, dass** dem Token (300; 400, 401, 402) das Attribut (A) zugeordnet wird, indem das Token (300; 400, 401, 402) in einem Unterwallet (601) des Wallets (600) abgelegt wird, welches die Entwicklungsgeneration (G; G1, G2, Gn) des Wallets (101, 102, 201-204, 501, 502; 600) mit der ältesten Entwicklungsgeneration (G; G1, G2, Gn) repräsentiert, in dem das digitale Token (300; 400, 401, 402) zumindest während der bisherigen Offline-Session (200) gehalten wurde.

11. Digitales Token (300; 400, 401, 402), eingerichtet und geeignet zur Übertragung zwischen digitalen Wallets (101, 102, 201-204, 501, 502; 600) einer Transaktionsinfrastruktur, die in Form von oder innerhalb von Sicherheitselementen realisiert sind, während einer Offline-Session (200), wobei die Wallets (101, 102, 201-204, 501, 502; 600) unterschiedlichen Entwicklungsgenerationen (G; G1, G2, Gn) angehören, wobei je älter ein Sicherheitselement ist, desto niedriger ist dessen Entwicklungsgeneration (G; G1, G2, Gn) und desto anfälliger sind die darauf eingerichteten Wallets (101, 102, 201-204, 501, 502; 600) für Kompromittierung und Manipulation, **dadurch gekennzeichnet dass** dem Token (300; 400, 401, 402) ein Attribut (A) zugeordnet ist, welches die Entwicklungsgeneration (G; G1, G2, Gn) des Wallets (101, 102, 201-204, 501, 502; 600) mit der ältesten Entwicklungsgeneration (G; G1, G2, Gn) repräsentiert, in dem das digitale Token (300; 400, 401, 402) zumindest während der bisherigen Offline-Session gehalten wurde.

12. Token (300; 400, 401, 402) nach Anspruch 11, **dadurch gekennzeichnet, dass** das Token (300; 400, 401, 402) eingerichtet ist, gemäß einem Verfahren der Ansprüche 2 bis 10 während einer Offline-Session (200) übertragen zu werden.

13. Digitales Wallet (101, 102, 201-204, 501, 502; 600) einer Transaktionsinfrastruktur, eingerichtet zur Übertragung von digitalen Token (300; 400, 401, 402) von oder an zumindest ein weiteres digitales Wallet (101, 102, 201-204, 501, 502; 600) der Transaktionsinfrastruktur während einer Offline-Session (200), **dadurch gekennzeichnet, dass** das Wallet (101, 102, 201-204, 501, 502; 600) einer Entwicklungsgeneration (G; G1, G2, Gn) angehört und eingerichtet ist, eine Übertragung von digitalen Token (300; 400, 401, 402) nach Anspruch 11 oder 12 gemäß einem Verfahren nach einem der Ansprüche 1 bis 10 zu unterstützen.

14. Digitales Wallet (101, 102, 201-204, 501, 502; 600) nach Anspruch 13, **dadurch gekennzeichnet, dass** das Wallet eingerichtet ist, das Attribut (A) eines an das Wallet (101, 102, 201-204, 501, 502; 600) übertragenen Tokens (300; 400, 401, 402) auf die Entwicklungsgeneration (G; G1, G2, Gn) des sendenden Wallets (101, 102, 201-204, 501, 502; 600) zu aktualisieren, wenn die Entwicklungsgeneration (G; G1, G2, Gn), die das Attribut (A) repräsentiert, jünger ist als die Entwicklungsgeneration (G; G1, G2, Gn) des sendenden Wallets (101, 102, 201-204, 501, 502; 600).

15. Digitale Transaktionsinfrastruktur, umfassend eine Vielzahl von digitalen Wallets (101, 102, 201-204, 501, 502; 600) nach Anspruch 13 oder 14 und digitale Token (300; 400, 401, 402) nach Anspruch 11 oder 12, wobei die Transaktionsinfrastruktur eingerichtet ist, Offline-Sessions (200) zu unterstützen, und vorzugsweise eine Validierungseinheit (110) umfasst, welche Token (300; 400, 401, 402) validiert und/oder erneuert, die von Wallets (101, 102, 201-204, 501, 502; 600) während einer Offline-Session (200) nicht akzeptiert wurden.

Fig. 1

102
G=5

300
A=2

203
G=4
A=2
300

300
A=2

202
G=2
A=5
A=2

Fig. 1a

Fig. 2a

Fig. 2

Fig. 3

EP 4 685 721 A1

600

W1

V=409

601

601

601

W1.1

A=G1

V1=325

W1.2

A=G2

V2=19

● ● ●

W1.n

A=Gn

Vn=65

Fig. 4

Europäisches
Patentamt

European
Patent Office

Office européen
des brevets

# EUROPÄISCHER RECHERCHENBERICHT

**Nummer der Anmeldung**

EP 24 19 0916

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2023/066197 A1 (DIGITAL CURRENCY INST THE PEOPLES BANK OF CHINA [CN]) 27. April 2023 (2023-04-27) * Absatz [0018] - Absatz [0108] * ----- | 1-15 | INV. G06Q20/36 G07G1/00 G07F17/40 |
| A | CN 118 229 281 A (KUNLUN SHUZHI TECH CO LTD; CHINA NAT PETROLEUM CORP) 21. Juni 2024 (2024-06-21) * das ganze Dokument * ----- | 1-15 | |
| A | EP 3 446 273 B1 (BUNDESDRUCKEREI GMBH [DE]) 16. August 2023 (2023-08-16) * das ganze Dokument * ----- | 1-15 | |
| A | RU 2 669 081 C2 (VIZA INTERNESHNL SERVIS ASSOSIEJSHN [US]) 8. Oktober 2018 (2018-10-08) * das ganze Dokument * ----- | 1-15 | |
| A | US 2023/214792 A1 (LEE BRENDAN [AU]) 6. Juli 2023 (2023-07-06) * das ganze Dokument * ----- | 1-15 | RECHERCHIERTE SACHGEBIETE (IPC) G07G G06Q |

Der vorliegende Recherchenbericht wurde für alle Patentansprüche erstellt

| Recherchenort | Abschlußdatum der Recherche | Prüfer |
|---|---|---|
| Den Haag | 9. Januar 2025 | Lutz, Andreas |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument
.......................................................................
& : Mitglied der gleichen Patentfamilie, übereinstimmendes
    Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**                EP 24 19 0916

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-01-2025

| Im Recherchenbericht angeführtes Patentdokument | Datum der Veröffentlichung | Mitglied(er) der Patentfamilie | Datum der Veröffentlichung |
|---|---|---|---|
| WO 2023066197 A1 | 27-04-2023 | CN     114186999 A | 15-03-2022 |
|  |  | EP       4421718 A1 | 28-08-2024 |
|  |  | WO    2023066197 A1 | 27-04-2023 |
| CN 118229281 A | 21-06-2024 | KEINE |  |
| EP 3446273 B1 | 16-08-2023 | DE 102016206916 A1 | 26-10-2017 |
|  |  | EP       3446273 A1 | 27-02-2019 |
|  |  | ES       2962122 T3 | 15-03-2024 |
|  |  | WO    2017182601 A1 | 26-10-2017 |
| RU 2669081 C2 | 08-10-2018 | AU    2014292980 A1 | 04-02-2016 |
|  |  | AU    2014293042 A1 | 11-02-2016 |
|  |  | AU    2018260860 A1 | 22-11-2018 |
|  |  | AU    2019201056 A1 | 07-03-2019 |
|  |  | AU    2021200807 A1 | 04-03-2021 |
|  |  | CA       2918788 A1 | 29-01-2015 |
|  |  | CA       2919199 A1 | 29-01-2015 |
|  |  | CN     105580038 A | 11-05-2016 |
|  |  | CN     105874495 A | 17-08-2016 |
|  |  | CN     113469670 A | 01-10-2021 |
|  |  | CN     115567273 A | 03-01-2023 |
|  |  | EP       3025292 A1 | 01-06-2016 |
|  |  | EP       3025293 A1 | 01-06-2016 |
|  |  | JP       6518244 B2 | 22-05-2019 |
|  |  | JP       6738731 B2 | 12-08-2020 |
|  |  | JP       6845274 B2 | 17-03-2021 |
|  |  | JP       7209031 B2 | 19-01-2023 |
|  |  | JP       7522872 B2 | 25-07-2024 |
|  |  | JP    2016532951 A | 20-10-2016 |
|  |  | JP    2016535517 A | 10-11-2016 |
|  |  | JP    2019106212 A | 27-06-2019 |
|  |  | JP    2021093195 A | 17-06-2021 |
|  |  | JP    2023036964 A | 14-03-2023 |
|  |  | KR   20160035028 A | 30-03-2016 |
|  |  | RU    2016105768 A | 28-08-2017 |
|  |  | RU    2016105772 A | 29-08-2017 |
|  |  | SG 10201800626R A | 27-02-2018 |
|  |  | SG 10201800629W A | 27-02-2018 |
|  |  | SG 11201600427R A | 26-02-2016 |
|  |  | SG 11201600520Q A | 26-02-2016 |
|  |  | US    2015032625 A1 | 29-01-2015 |
|  |  | US    2015032626 A1 | 29-01-2015 |
|  |  | US    2015032627 A1 | 29-01-2015 |
|  |  | US    2018285864 A1 | 04-10-2018 |
|  |  | US    2020410483 A1 | 31-12-2020 |

EPO FORM P0461

Für nähere Einzelheiten zu diesem Anhang : siehe Amtsblatt des Europäischen Patentamts, Nr.12/82

Seite 1 von 2

**ANHANG ZUM EUROPÄISCHEN RECHERCHENBERICHT
ÜBER DIE EUROPÄISCHE PATENTANMELDUNG NR.**

EP 24 19 0916

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-01-2025

| Im Recherchenbericht angeführtes Patentdokument | Datum der Veröffentlichung | Mitglied(er) der Patentfamilie | Datum der Veröffentlichung |
|---|---|---|---|
| | | US 2022172199 A1 | 02-06-2022 |
| | | US 2024161105 A1 | 16-05-2024 |
| | | WO 2015013522 A1 | 29-01-2015 |
| | | WO 2015013548 A1 | 29-01-2015 |
| US 2023214792 A1 | 06-07-2023 | AU 2021290092 A1 | 09-02-2023 |
| | | EP 4165824 A1 | 19-04-2023 |
| | | GB 2597592 A | 02-02-2022 |
| | | US 2023214792 A1 | 06-07-2023 |
| | | WO 2021250022 A1 | 16-12-2021 |
| | | WO 2021250037 A1 | 16-12-2021 |
| | | WO 2021250045 A1 | 16-12-2021 |

Für nähere Einzelheiten zu diesem Anhang : siehe Amtsblatt des Europäischen Patentamts, Nr.12/82

EPO FORM P0461

Seite 2 von 2